(19) Europäisches Patentamt
European Patent Office
Office européen des brevets

(11) EP 2 333 604 A1

(12) EUROPEAN PATENT APPLICATION
published in accordance with Art. 153(4) EPC

(43) Date of publication:
15.06.2011 Bulletin 2011/24

(51) Int Cl.:
*G02F 1/133* (2006.01)     *G02F 1/1368* (2006.01)
*G06T 1/00* (2006.01)      *G09G 3/20* (2006.01)
*G09G 3/36* (2006.01)

(21) Application number: 09817550.8

(22) Date of filing: 09.06.2009

(86) International application number:
PCT/JP2009/060542

(87) International publication number:
WO 2010/038512 (08.04.2010 Gazette 2010/14)

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 30.09.2008 JP 2008254398

(71) Applicant: Sharp Kabushiki Kaisha
Osaka-shi, Osaka 545-8522 (JP)

(72) Inventors:
• SUGIYAMA, Hiroaki
OSAKA 545-8522 (JP)
• MAEDA, Kazuhiro
OSAKA 545-8522 (JP)
• SHIRAKI, Ichiro
OSAKA 545-8522 (JP)

(74) Representative: Müller-Boré & Partner
Patentanwälte
Grafinger Straße 2
81671 München (DE)

(54) DISPLAY DEVICE

(57) Outside provision of first row lines (CS(1) and CS(2)) is identical between a first picture element row (R1) and a second picture element row (R2) of each picture element row pair (20) in terms of whether each first row line is provided, with respect to picture element electrodes (ER(1), EG(1), EB(1), ER(2), EG(2), and EB(2)), so as to be closer to a photosensor circuit (SC) or farther from the photosensor circuit (SC).

FIG. 1

**Description**

Technical Field

The present invention relates to a display device including a photosensor in a display region.

Background Art

There has been publicly used a liquid crystal display device including a photosensor in a pixel circuit. Attempts have been made to use such a display device for fingerprint authentication or in a touch panel, for example.

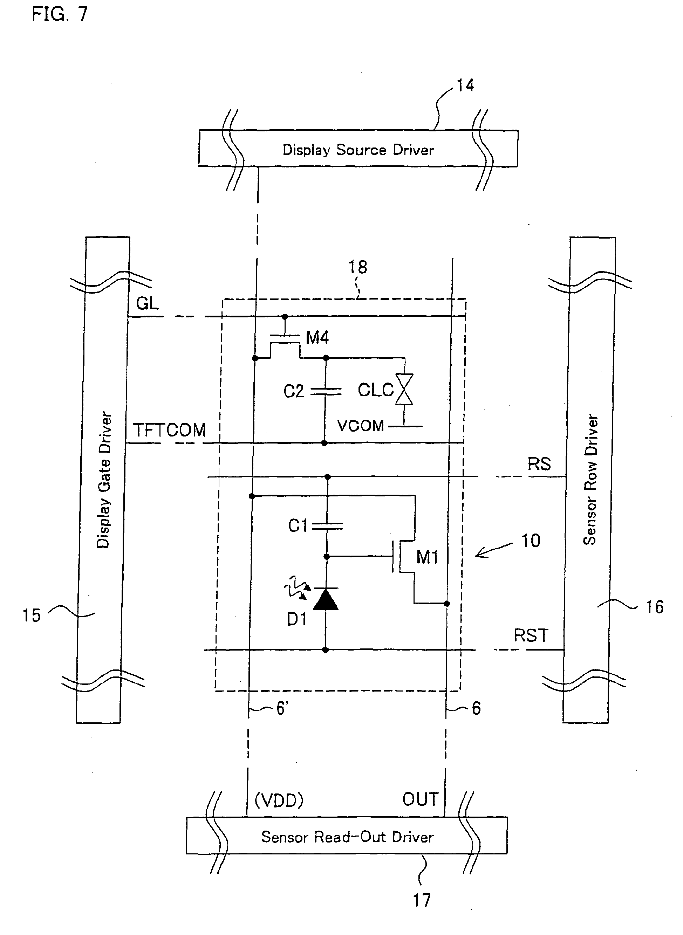

Fig. 7 illustrates (i) a configuration of a display region in such a display device disclosed in Patent Literature 1 and (ii) a block diagram of a circuit for driving the display region.

In the display region, pixels 18 constituting an array each include not only a display circuit including members such as a liquid crystal capacitor CLC, a storage capacitor C2, and a TFT M4, but also a sensor circuit 10. The sensor circuit 10 includes an n-channel type amplifier TFT M1, a photosensor D1, and a capacitor C1.

The display circuit is configured as follows: The TFT M4 has (i) a gate connected to a gate line GL and (ii) a source connected to a data line 6'. The liquid crystal capacitor CLC is formed between (i) a pixel electrode connected to a drain of the TFT M4 and (ii) a common electrode to which a common voltage VCOM is applied. The storage capacitor C2 is formed between the pixel electrode and a common line TFTCOM.

The gate line GL and the common line TFTCOM are driven by a gate driver 15, whereas the data line 6' is driven by a source driver 14.

The sensor circuit 10 is configured as follows: The photosensor D1 has a cathode connected to a first end of the capacitor C1. The amplifier TFT M1 has (i) a gate connected to a node between the photosensor D1 and the capacitor C1, (ii) a drain connected to the data line 6', and (iii) a source connected to a sensor output line 6. The data line 6' is driven by a sensor read-out driver 17 via a switch (not shown) during a sensor driving period, which is a period separate from a data signal writing period. The sensor read-out driver 17 reads a voltage of the sensor output line 6.

The photosensor D1 has an anode connected to a reset line RST. The capacitor C1 has a second end connected to a row select line RS. The reset line RST and the row select line RS are driven by a sensor row driver 16.

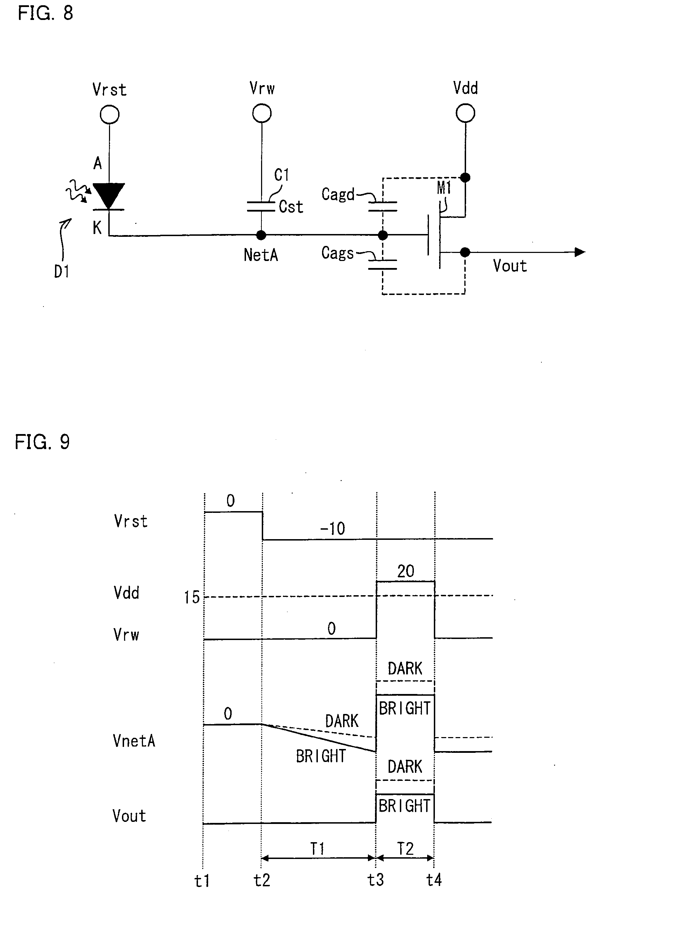

Fig. 8 illustrates in detail a specific circuit configuration of the sensor circuit 10. The drain of the amplifier TFT M1 is connected to the data line 6', and receives a voltage Vdd from the sensor read-out driver 17 during the sensor driving period. The source of the amplifier TFT M1 supplies a sensor output voltage Vout to the sensor output line 6. The gate and the drain of the amplifier TFT M1 form a capacitor Cagd therebetween, whereas the gate and the source of the amplifier TFT M1 form a capacitor Cags therebetween.

The photosensor D1 includes a pin photodiode. The anode A of the photosensor D1 receives a voltage Vrst applied from the reset line RST.

The capacitor C1 has a capacitor value Cst, and receives at the second end a voltage Vrw applied from the row select line RS.

The gate of the amplifier TFT M1, the cathode K of the photosensor D1, and the first end of the capacitor C1 are connected to one another at a node, which the description below refers to as "node NetA."

With reference to Fig. 9, the following description deals with operation of the sensor circuit 10 having the above configuration.

During the sensor driving period, the data line 6' is disconnected from the source driver 14 and is connected to the sensor read-out driver 17. At an initial time t1 of the sensor driving period, the voltage Vrst applied from the sensor row driver 16 to the reset line RST is set to a high level (for example, 0 V). As such, the photosensor D1 becomes conductive in a forward direction, and a potential VnetA at the node NetA is thus set to a high level (for example, 0 V). At the time t1, the voltage Vrw applied from the sensor row driver 16 to the row select line RS is set to a low level (for example, 0 V). Further, at the time t1, the voltage Vdd applied from the sensor read-out driver 17 to the data line 6' is set to, for example, a 15-V DC voltage.

Next, at a time t2, the sensor row driver 16 sets the voltage Vrst to a low level (for example, -10 V). As such, the anode A of the photosensor D1 has a potential lower than a potential of the cathode K, and the photosensor D1 thus becomes reverse biased.

At the time t2, a charging period T1 starts. During the charging period T1, the node NetA is charged in correspondence with an intensity of light emitted to the photosensor D1. When light is emitted to the photosensor D1, an amount of a leak current flowing from the cathode K to the anode A changes in correspondence with the intensity of the light emitted. In a bright part, the amount of the leak current is large. Because of such a large amount of the leak current, the potential at the anode A, that is, the potential VnetA, decreases rapidly. In a dark part, on the other hand, the amount of the leak current is small. Because of such a small amount of the leak current, the potential VnetA decreases slowly.

The charging period T1 ends at a time t3, at which the sensor row driver 16 sets the voltage Vrw to a high level (for example, 20 V). The potential VnetA in response increases from a negative potential to a positive potential due to capacitive coupling provided by the capacitor C1. As such, a potential difference between the bright part and the dark part is maintained. At the time 3, the amplifier TFT M1 becomes conductive. Further, the potential VnetA, that is, a gate potential of the amplifier TFT M1, is increased due to a bootstrap effect through capacitive coupling between the capacitors Cagd and Cags. The amplifier TFT M1 thus outputs from its source an output voltage Vout which is higher than an output voltage Vout that would be obtained without the bootstrap effect. At the time t3, an output period T2 for sensor output starts.

The voltage Vrw causes the potential VnetA to increase by a boost value ΔVnetA, which is defined as

$$\Delta VnetA = \alpha \times Vrw_{p\text{-}p}.$$

In this expression, $\alpha$ is defined as

$$\alpha = Cst/Ctotal,$$

where Ctotal (total capacitor value) is defined as follows:

$$Ctotal = Cdgs + Cst + Cagd + Cags$$

(with each capacitor symbol in the right-hand side representing its corresponding capacitor value).

Further, Vrwp-p is a peak-to-peak voltage of the voltage Vrw, and is 20 V in this example.

The output voltage Vout has a value corresponding to the potential VnetA. Thus, by causing the sensor read-out driver 17 to read the output voltage Vout during the output period T2, it is possible to detect the sensor output of the photosensor D1, that is, the intensity of light emitted to the photosensor D 1.

The output period T2 ends at a time t4, at which the sensor row driver 16 sets the voltage Vrw back to the low level (for example, 0 V) to end the sensor driving period.

Citation list

Patent Literature 1
PCT International Publication W02007/ 145347 (Publication Date: December 21, 2007)
Patent Literature 2
Japanese Patent Application Publication, Tokukai, No. 2007-47991 A (Publication Date: February 22, 2007)

Summary of Invention

Technical Problem

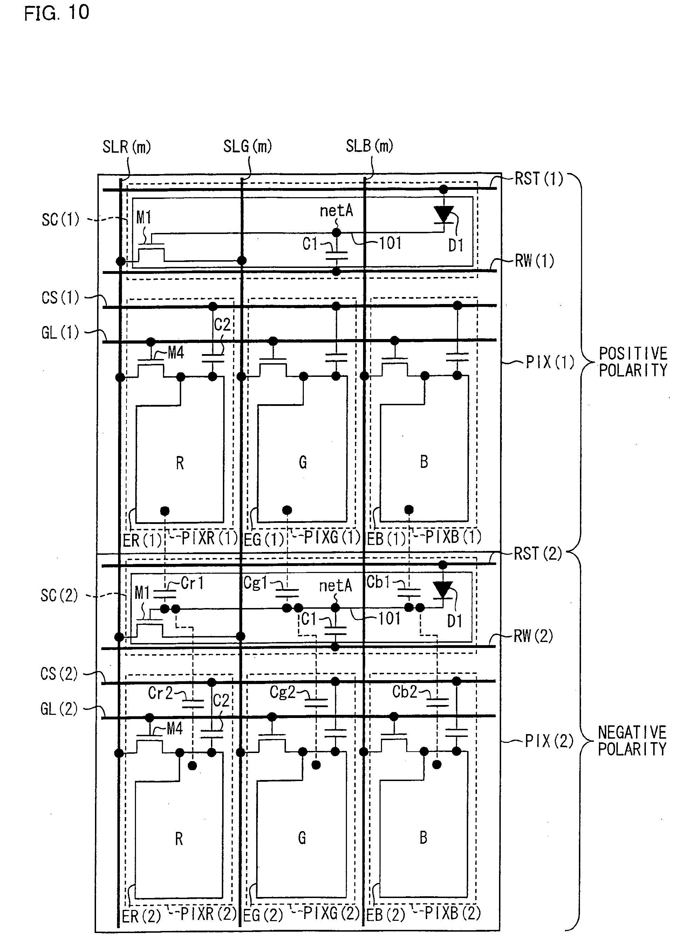

Fig. 10 illustrates an example layout of pixels in each of which the sensor circuit described above is provided. In the present specification, expressions such as "outwardly adjacent to 'bounds X'" are used to describe a region which is not surrounded by a periphery of the 'bounds X' in a plan view. This plan view is a view taken as a target configuration is seen in a direction perpendicular to a panel surface (display surface). Further, expressions such as "outwardly adjacent to 'bounds X'" in a Y direction" are used to describe a part of a region outside 'bounds X' which part is located away from the 'bounds X' in a "Y direction." The term "Y direction" encompasses first and second senses opposite to each other. The expression "outwardly adjacent to 'bounds X'" can thus be construed as either describing a region which is located outside of and away from an X region in a first sense or describing a region which is located outside of and away from an X region in a second sense.

The expressions "layer (above or over X)" and "layer (below or under X)" describe locations relative to each other in a panel thickness direction. The expression "layer above/below X" describes locations relative to each other in the panel thickness direction by specifying a layer, among layers stacked in the panel thickness direction, in which each comparison target belongs. The expression "layer over/under X" describes locations relative to each other in the panel thickness direction, the locations being respective locations of comparison targets sharing a region in a plan view taken in the direction perpendicular to the panel surface (display surface).

Fig. 10 is a plan view, as seen in the direction perpendicular to the display surface, which illustrates respective configurations of composite pixels PIX(1) and PIX(2) aligned in a column direction on an m-th column. The composite pixel PIX(1) includes an R picture element PIXR(1), a G picture element PIXG(1), a B picture element PIXB(1), and a sensor circuit SC(1). The composite pixel PIX(2) includes an R picture element PIXR(2), a G picture element PIXG(2), a B picture element PIXB(2), and a sensor circuit SC(2). The sensor circuit SC(1) is adjacent to the picture elements PIXR(1), PIXG(1), and PIXB(1), which are aligned in a row direction, in a first sense included in the column direction so as to be closer to a storage capacitor line CS(1). The sensor circuit SC(2) is adjacent to the picture elements PIXR(2), PIXG(2), and PIXB(2), which are aligned in the row direction, in a second sense included in the column direction so as to be closer to a storage capacitor line CS(2).

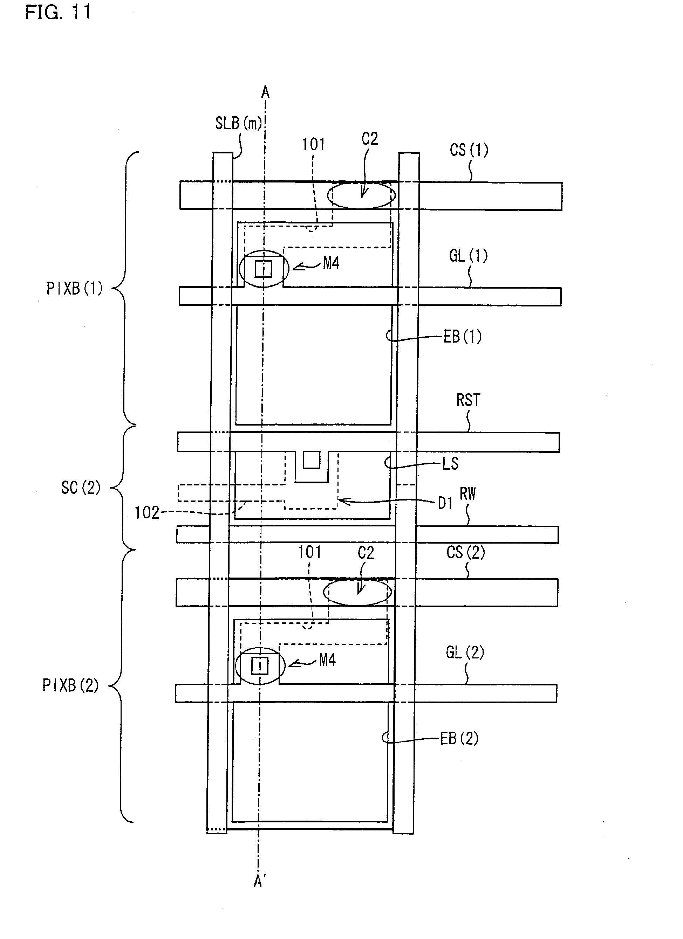

The display device further includes gate lines GL(1) and GL(2), which correspond to the composite pixels PIX (1) and PIX(2), respectively. As illustrated in Fig. 11, the gate line GL(1) in practice extends across the picture element electrodes ER(1), EG(1), and EB(1) in a layer under them, whereas the gate line GL(2) in practice extends across the picture element electrodes ER(2), EG(2), and EB(2) in a layer under them. Further, as illustrated in Fig. 11, the storage capacitor line CS(1), which corresponds to the composite pixel PIX(1), in practice extends through a region which is outwardly adjacent to the picture element electrodes ER(1), EG(1), and EB(1) in the column direction in the plan view, whereas the storage capacitor line CS(2), which corresponds to the composite pixel PIX(2), in practice extends through a region which is outwardly adjacent to the picture element electrodes ER(2), EG(2), and EB(2) in the column direction in the plan view. The gate lines GL(1) and GL(2) and the storage capacitor lines CS(1) and CS(2) are each made of a gate metal. The picture element electrodes ER(1), EG(1), EB(1), ER(2), EG(2), and EB(2) are each, for example, a transparent electrode made of ITO or the like, and are provided in a layer above the gate metal.

The storage capacitor lines CS(1) and CS(2) each form a storage capacitor C2 between each corresponding electrode 101 and itself. The electrode 101 is made of a Si material layer, and is provided in a layer below the gate metal.

The display device further includes source lines SLR(m), SLG(m), and SLB(m) for R, G, and B, respectively. The source lines SLR(m), SLG(m), and SLB(m) each correspond to the data line 6' illustrated in Fig. 7. As illustrated in Fig. 11, the source lines SLR(m), SLG(m), and SLB(m) are provided in a layer above the gate lines GL(1) and GL(2) and the storage capacitor lines CS(1) and CS(2).

As illustrated in Fig. 10, the sensor circuit SC(1) includes an amplifier TFT M1, a photosensor D1, and a capacitor C1. The amplifier TFT M1 the photosensor D1, and the capacitor C1 are all provided in a region located, in the plan view, between a reset line RST (1) and a read-out line RW(1), both of which extend in the row direction. The reset line RST (1) and the read-out line RW(1) serve as opposite sides of a region of the sensor circuit SC(1) which sides align in the column direction.

Similarly, the sensor circuit SC(2) includes an amplifier TFT M1, a photosensor D1, and a capacitor C1. The amplifier TFT M1, the photosensor D1, and the capacitor C1 are all provided in a region located, in the plan view, between a reset line RST (2) and a read-out line RW(2), both of which extend in the row direction. The reset line RST (2) and the read-out line RW(2) serve as opposite sides of a region of the sensor circuit SC(2) which sides align in the column direction.

The reset lines RST (1) and RST(2) each correspond to the reset line RST illustrated in Fig. 7, whereas the read-out lines RW(1) and RW(2) each correspond to the row select line RS illustrated in Fig. 7. The reset lines RST (1) and RST(2) and the read-out lines RW(1) and RW(2) are each made of the gate metal.

The amplifier TFT M1, the photosensor D1, and the capacitor C1 of each sensor circuit are connected to one another at a node NetA via an interconnect conductor 102. The interconnect conductor 102 is made of the Si material layer, and is provided in a layer below the gate metal. The sensor circuits can each further include a light shield in a layer under the photosensor D1.

In the composite pixels PIX(1) and PIX(2) with the above configuration, the sensor circuits SC(1) and SC(2) are each provided so as to be separated from its corresponding picture element electrodes by a storage capacitor line as described above, whereas the sensor circuits SC(1) and SC(2) are each provided close to picture element electrodes of a composite pixel which is provided adjacent to the sensor circuit in the column direction across from the storage capacitor line.

The liquid crystal display device is driven by AC driving. As such, the picture element electrodes ER(1), EG (1), and EB(1) of the composite pixel PIX(1) retain a data potential of either a positive polarity or a negative polarity, whereas the picture element electrodes ER(2), EG(2), and EB(2) of the composite pixel PIX(2) retain a data potential of a polarity opposite to the above polarity (see Fig. 10). The sensor circuit SC(2) is thus subjected to potential fluctuations caused by (i) the neighboring composite pixel PIX(1) via parasitic capacitances Cr1, Cg1, and Cb1 of the respective picture element electrodes ER(1), EG(1), and EB(1) and (ii) the corresponding composite pixel PIX(2) via parasitic capacitances Cr2, Cg2, and Cb2 of the respective picture element electrodes ER(2), EG(2), and EB(2). These potential fluctuations increase in correspondence with a degree of unbalance because the picture element electrodes ER(1), EG (1), and EB(1) are not balanced in position with respect to (ii) the picture element electrodes ER(2), EG(2), and EB(2) in relation to the sensor circuit SC(2).

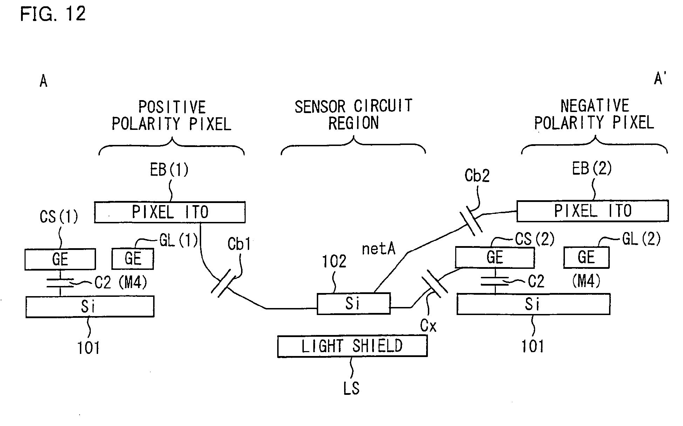

This unbalance is illustrated in Fig. 12, which is a cross-sectional view taken along line A-A' of Fig. 11.

The interconnect conductor 102 of the sensor circuit SC(2) forms (i) the parasitic capacitance Cb1 between the picture element electrode EB(1) and itself and (ii) the parasitic capacitance Cb2 between the picture element electrode EB(2) and itself. The picture element electrode EB(1) has a data potential which is opposite in polarity to a data potential of the picture element electrode EB(2). In this example, the parasitic capacitance Cb1 is larger than the parasitic capacitance Cb2. The potential of the interconnect conductor 102 is thus affected more by the picture element electrode EB(1) than by the picture element electrode EB(2). Further, the sensor circuit SC in this case is closer to the storage capacitor line CS(2) than to the picture element electrode EB(2). The interconnect conductor 102 is thus more likely to be affected by a potential of the storage capacitor line CS(2) via a parasitic capacitance Cx, which is formed between the interconnect conductor 102 and the storage capacitor line CS(2). As such, the sensor circuit SC(2) is affected more by the unbalance caused by an overall pattern alignment around the sensor circuit SC(2). As a result, even if the sensor circuit SC(2) is designed so that a potential at the node NetA is controlled by application of voltages to the reset line RST (2) and the read-out line RW(2), the potential of the sensor circuit SC(2) is defectively affected by the potentials of its neighboring patterns so as to fall outside a range of designed values.

As described above, conventional display devices including a photosensor circuit in a pixel region have a problem that the photosensor circuit is subjected to potential fluctuations due to unbalance caused by positioning of neighboring picture element electrodes.

The present invention has been accomplished in view of the above problem of conventional art. It is an object of the present invention to provide a display device including a photosensor circuit which is not easily subjected to potential fluctuations caused by positioning of picture element electrodes near the photosensor circuit.

Solution to Problem

In order to solve the above problem, a display device of the present invention is a display device which is an active matrix display device, including: an array of a plurality of picture elements each including a picture element electrode to which a data signal is written; at least one photosensor circuit which is provided in such a manner as to be inserted in the array and which outputs a signal in accordance with an intensity of irradiation light; and light intensity detecting means for detecting the signal of the at least one photosensor circuit so as to detect the intensity of the irradiation light, the at least one photosensor circuit being respectively provided in a region between a first picture element row and a second picture element row adjacent to each other composing a picture element pair, the first picture element row and the second picture element row each including at least one first row line, separate from a line for the at least one photosensor circuit, of which a footprint covers, as seen in a first direction perpendicular to a display surface, at least a portion of an outside area being outwardly adjacent to either one of edges, opposite in a column direction, of a footprint of the picture element electrode, the outside areas with regard to the first picture element row and the second picture element row of the respective picture element row pair both being outwardly adjacent to either closer edges of the opposite edges to the at least one photosensor circuit or farther edges of the opposite edges from the at least one photosensor circuit.

In a case where AC driving is carried out so that the data signal has a polarity which is opposite between (i) picture elements of the first picture element row and (ii) picture elements of the second picture element row, the photosensor circuit is subjected to (i) potential fluctuations caused by picture element electrodes via respective parasitic capacitances each of which picture element electrodes maintains a data potential of the first picture element row, the data potential having either a positive polarity or a negative polarity, and (ii) potential fluctuations caused by picture element electrodes via respective parasitic capacitances each of which picture element electrodes maintains a data potential of the second picture element row, the data potential having a polarity opposite to the above polarity. According to the above arrangement, however, the picture element electrodes of the first picture element row are positioned with respect to the picture element electrodes of the second picture element row so that a state close to a balanced state is achieved for the photosensor circuit. The above potential fluctuations are consequently small because an effect of the picture element electrodes of the first picture element row cancels out that of the picture element electrodes of the second picture element row.

As such, it is possible to provide a display device including a photosensor circuit which is not easily subjected to potential fluctuations caused by positioning of picture element electrodes near the photosensor circuit.

In order to solve the above problem, the display device of the present invention may be arranged such that the first picture element row and the second picture element row each further include at least one second row line, separate from the line for the at least one photosensor circuit, of which a footprint covers any portion of an inside area rather than that of the outside area as seen in the first direction; the inside area is present within a span in the column direction, the span being defined by two picture element electrode edges including a first picture element electrode edge and a second picture element electrode edge, the first picture element electrode edge being closer to the at least one photosensor circuit than the second picture element electrode edge is; and the inside areas with regard to the first picture element row and the second picture element row of the respective picture element row pair are, as seen in the first direction, both inwardly adjacent either more closely to the first picture element electrode edge than to the second picture element electrode edge or more closely to the second picture element electrode edge than to the first picture element electrode edge.

With the arrangement, the picture element electrodes of the first picture element row are positioned with respect to the picture element electrodes of the second picture element row so that a state close to a balanced state is achieved for the photosensor circuit. In addition, the picture element electrodes are positioned with respect to the second row line, provided close to the picture element electrodes in the panel thickness direction, so that a state close to a balanced state is achieved for the photosensor circuit. As a result, the photosensor circuit is further less likely to be subjected to potential fluctuations caused by neighboring patterns.

In order to solve the above problem, the display device of the present invention may be arranged such that the at least one first row line is a storage capacitor line; and both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to farther edges of the opposite edges from the at least one photosensor circuit.

According to the above arrangement, in a case where the storage capacitor lines on the respective first and second picture element rows are driven so as not to be opposite to each other in phase. With the arrangement, it is possible, by separating the storage capacitor lines far from the photosensor circuit, to solve the problem that it is difficult to cause effects of the respective storage capacitor lines on the potential of the photosensor circuit to cancel out each other.

In order to solve the above problem, the display device of the present invention may be arranged such that the at least one first row line is a storage capacitor line; the at least one second row line is a scanning signal line; and both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to farther edges of the opposite edges from the at least one photosensor circuit.

According to the above arrangement, in a case where the storage capacitor lines on the respective first and second picture element rows are driven so as not to be opposite to each other in phase. With the arrangement, it is possible, by separating the storage capacitor lines far from the photosensor circuit, to solve the problem that it is difficult to cause effects of the respective storage capacitor lines on the potential of the photosensor circuit to cancel out each other.

In order to solve the above problem, the display device of the present invention may be arranged such that the at least one first row line is a storage capacitor line; and both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to closer edges of the opposite edges to the at least one photosensor circuit.

With the arrangement, the storage capacitor lines cause no effect on the potential of the photosensor circuit in a case where the storage capacitor lines are not driven so as to be each constantly set at a fixed potential. As such, in the case where the storage capacitor lines of the display device are not driven, it is possible to prevent a change in the potential of the photosensor circuit.

In order to solve the above problem, the display device of the present invention may be arranged such that the at least one first row line is a storage capacitor line; the at least one second row line is a scanning signal line; and both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to closer edges of the opposite edges to the at least one photosensor circuit.

With the arrangement, the storage capacitor lines cause no effect on the potential of the photosensor circuit in a case where the storage capacitor lines are not driven so as to be each constantly set at a fixed potential. As such, in the case where the storage capacitor lines of the display device are not driven, it is possible to prevent a change in the potential of the photosensor circuit.

In order to solve the above problem, the display device of the present invention may be arranged such that the at least one first row line is a scanning signal line; and both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to farther edges of the opposite edges from the at least one photosensor circuit.

With the arrangement, the scanning signal lines each include both a portion connected to the selection element of a picture element and the other portion. A picture element electrode is thus unlikely to cause a uniform effect on the potential of the photosensor circuit via a single scanning signal line. As such, it is possible, by separating the scanning signal lines far from the photosensor circuit, to easily solve the problem that it is necessary to cause effects of the respective first and second picture element rows to cancel out each other more accurately.

In order to solve the above problem, the display device of the present invention may be arranged such that the at least one first row line is a scanning signal line; the at least one second row line is a storage capacitor line; and both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to farther edges of the opposite edges from the at least one photosensor circuit.

With the arrangement, the scanning signal lines each include both a portion connected to the selection element of a picture element and the other portion. A picture element electrode is thus unlikely to cause a uniform effect on the potential of the photosensor circuit via a single scanning signal line. As such, it is possible, by separating the scanning signal lines far from the photosensor circuit, to easily solve the problem that it is necessary to cause effects of the respective first and second picture element rows to cancel out each other more accurately.

In order to solve the above problem, the display device of the present invention may be arranged such that the at least one first row line is a scanning signal line; and both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to closer edges of the opposite edges to the at least one photosensor circuit.

With the arrangement, the scanning signal lines are normally not driven when the photosensor circuit is driven, and thus each normally have only a small effect on the potential of the photosensor circuit. As such, it is possible to easily prevent a change in the potential of the photosensor circuit.

In order to solve the above problem, the display device of the present invention may be arranged such that the at least one first row line is a scanning signal line; the at least one second row line is a storage capacitor line; and both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to closer edges of the opposite edges to the at least one photosensor circuit.

With the arrangement, the scanning signal lines are normally not driven when the photosensor circuit is driven, and thus each normally have only a small effect on the potential of the photosensor circuit. As such, it is possible to easily prevent a change in the potential of the photosensor circuit.

In order to solve the above problem, the display device of the present invention may be arranged such that the at least one first row line of each of the first picture element row and the second picture element row includes a plurality of lines for respective signals; and the plurality of lines included in the at least one first row line are arranged in the column direction in an order which is, as seen in the first direction, reversed between the first picture element row and the second picture element row of the respective picture element row pair.

With the arrangement, it is possible to cause effects of the respective first row lines on the potential of the photosensor circuit to highly accurately cancel out each other.

In order to solve the above problem, the display device of the present invention may be arranged such that the at least one second row line of each of the first picture element row and the second picture element row includes a plurality of lines for respective signals; and the plurality of lines included in the at least one second row line are arranged in the column direction in an order which is, as seen in the first direction, reversed between the first picture element row and the second picture element row of the respective picture element row pair.

With the arrangement, it is possible to cause effects of the respective second row lines on the potential of the photosensor circuit to highly accurately cancel out each other.

In order to solve the above problem, the display device of the present invention may be arranged such that the display device is capable of being driven so that the data signal has a polarity which is opposite between the first picture element row and the second picture element row of the respective picture element row pair.

With the arrangement, it is possible that an effect of the picture element electrodes of the first picture element row on the potential of the photosensor circuit cancels out an effect of the picture element electrodes of the second picture element row on the potential of the photosensor circuit.

In order to solve the above problem, the display device of the present invention may be arranged such that each picture element row in the array corresponds to the respective picture element row pair.

With the arrangement, a row of photosensor circuits is provided for each two picture element rows. As such, the display device is arranged so as to be suitable for AC driving in which the polarity of the data signal is reversed every picture element row.

In order to solve the above problem, the display device of the present invention may be arranged such that a plurality of the respective picture element row pair are formed so as to be individually separated by a space equivalent to k-2 picture element rows in a case where an upper picture element row of two picture element rows of an uppermost one of the plurality of the respective picture element row pair corresponds to a k-th row, where k is a natural number not smaller than 2.

With the arrangement, the two picture element rows of the picture element row pair on the k-th row are separated from each other by a space equivalent to k-2 picture element rows. As such, in a case where display modes are converted to each other for display which display modes have respective resolutions whose respective multiplying factors are different from each other at a ratio of factors of k, it is possible to cause the polarities of respective data signals for the first and second picture element rows in each picture element row pair to be different from each other for any resolution.

Advantageous Effects of Invention

As described above, a display device of the present invention is a display device which is an active matrix display device, including: an array of a plurality of picture elements each including a picture element electrode to which a data signal is written; at least one photosensor circuit which is provided in such a manner as to be inserted in the array and which outputs a signal in accordance with an intensity of irradiation light; and light intensity detecting means for detecting the signal of the at least one photosensor circuit so as to detect the intensity of the irradiation light, the at least one photosensor circuit being respectively provided in a region between a first picture element row and a second picture element row adjacent to each other composing a picture element pair, the first picture element row and the second picture element row each including at least one first row line, separate from a line for the at least one photosensor circuit, of which a footprint covers, as seen in a first direction perpendicular to a display surface, at least a portion of an outside area being outwardly adjacent to either one of edges, opposite in a column direction, of a footprint of the picture element electrode, the outside areas with regard to the first picture element row and the second picture element row of the respective picture element row pair both being outwardly adjacent to either closer edges of the opposite edges to the at least one photosensor circuit or farther edges of the opposite edges from the at least one photosensor circuit.

As such, it is possible to provide a display device including a photosensor circuit which is not easily subjected to potential fluctuations caused by positioning of picture element electrodes near the photosensor circuit.

Brief Description of Drawings

Fig. 1

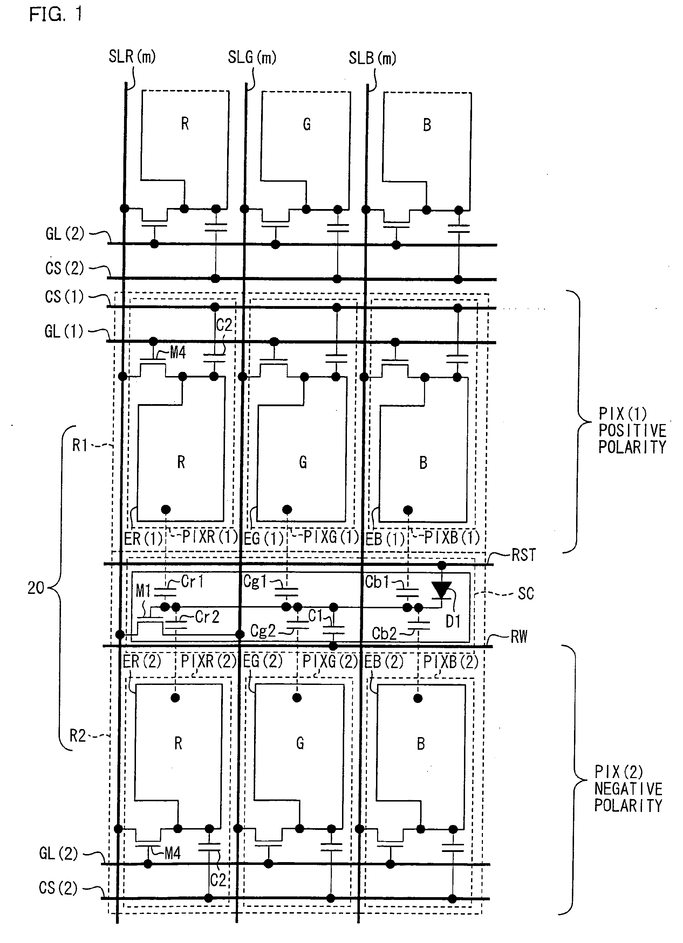

Fig. 1 is a plan view illustrating a layout of pixels in a display device including a photosensor circuit in accordance with an embodiment of the present invention.
Fig. 2

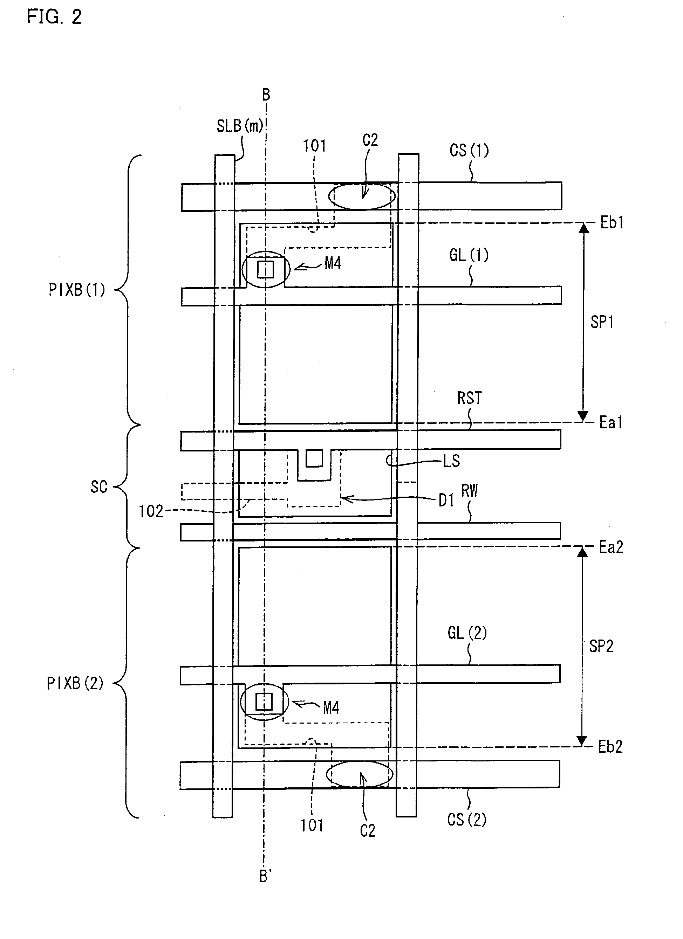

Fig. 2 is a plan view illustrating in more detail the pixel layout of Fig. 1.
Fig. 3

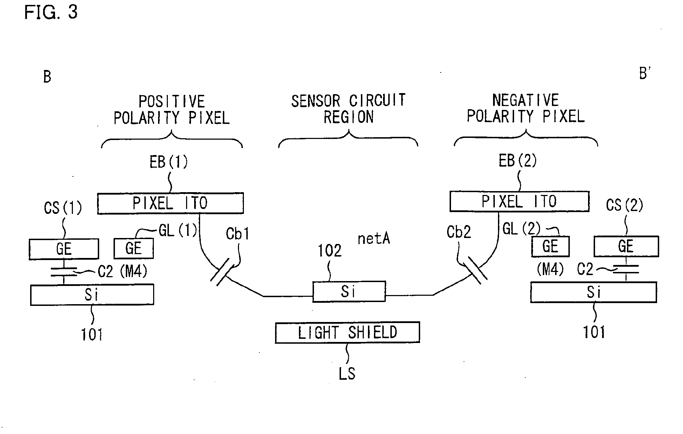

Fig. 3 is a cross-sectional view taken along line B-B' of Fig. 2.
Fig. 4

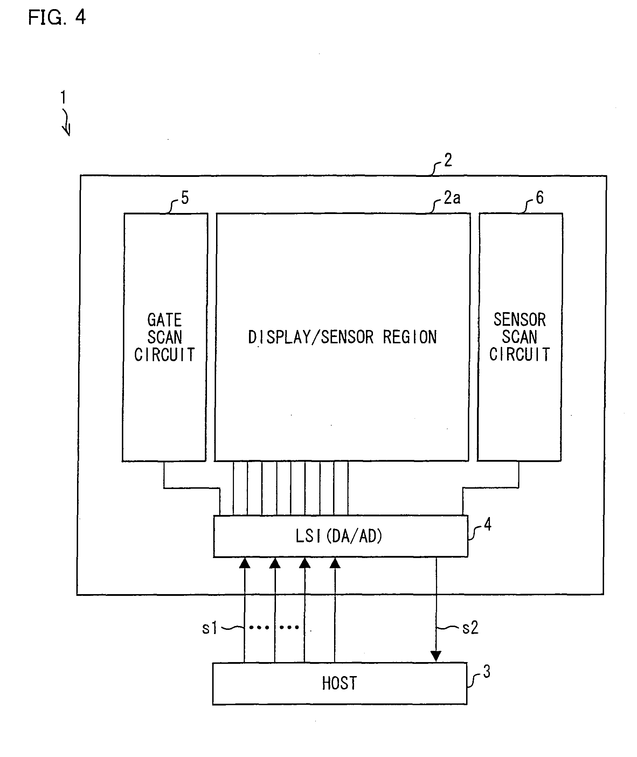

Fig. 4 is a block diagram illustrating a configuration of the display device in accordance with the embodiment of the present invention.
Fig. 5

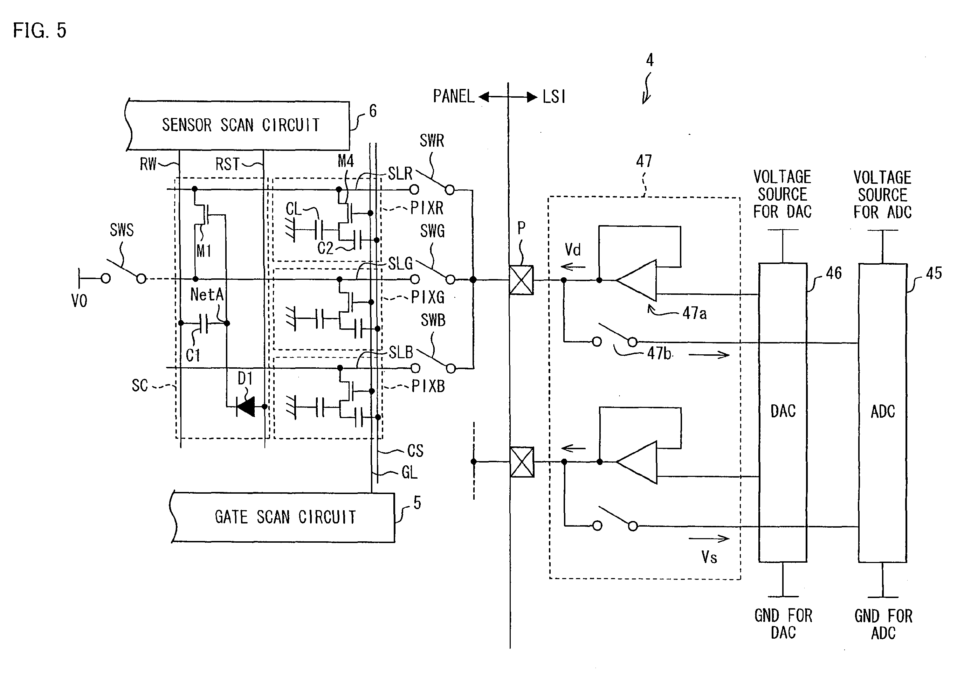

Fig. 5 is a circuit block diagram illustrating a configuration of a display panel included in the display device of Fig. 4.
Fig. 6

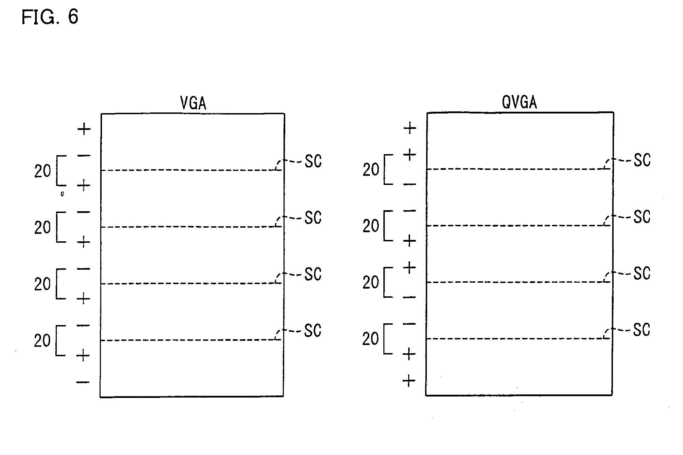

Fig. 6 is a plan view illustrating how photosensor circuits are arranged for resolution conversion in accordance with the embodiment of the present invention.
Fig. 7
Fig. 7 is a circuit block diagram illustrating a configuration of a display device including a photosensor in accordance with conventional art.
Fig. 8
Fig. 8 is a circuit diagram illustrating a configuration of a photosensor circuit in accordance with conventional art.
Fig. 9

Fig. 9 is a timing chart illustrating operation of the photosensor circuit of Fig. 8.

Fig. 10

Fig. 10 is a plan view illustrating a pixel layout in a conventional display device including the photosensor circuit of Fig. 8.

Fig. 11

Fig. 11 is a plan view illustrating in detail the pixel layout of Fig. 10.

Fig. 12

Fig. 12 is a cross-sectional view taken along line A-A' of Fig. 11.

Fig. 13

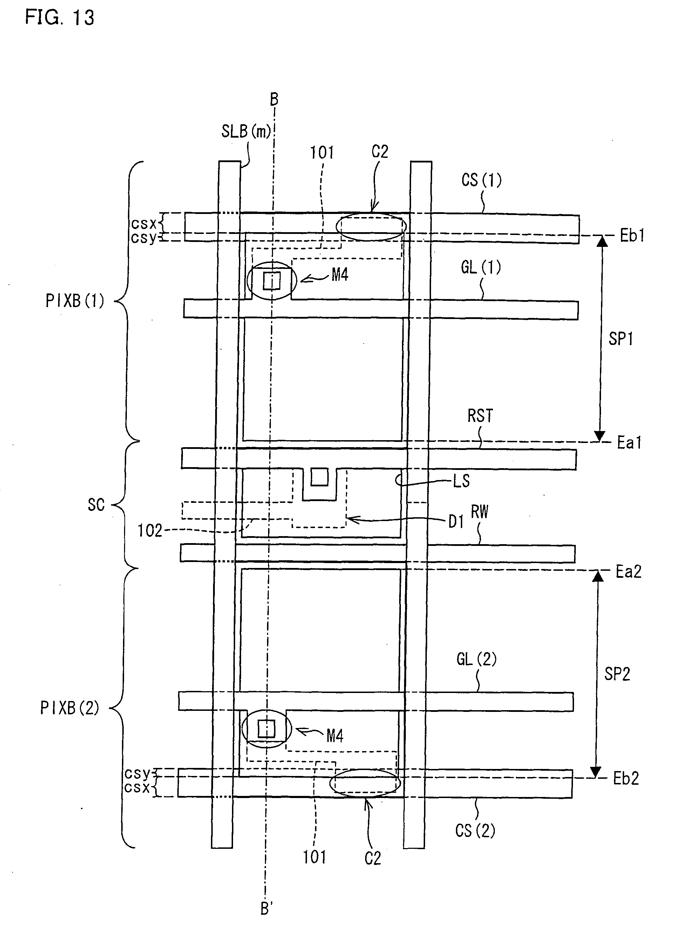

Fig. 13 is a plan view illustrating another pixel layout in accordance with the embodiment of the present invention.

Description of Embodiments

An embodiment of the present invention is described below with reference to Figs. 1 through 6 and 13.

Fig. 4 illustrates a configuration of a liquid crystal display device 1 (display device) according to the present embodiment.

The liquid crystal display device 1 is an active matrix display device, and includes a display panel 2 and a host controller 3.

The display panel 2 has a display/sensor region 2a, a source driver 4 (data signal line driving circuit), a gate scan circuit 5 (scanning signal line driving circuit), and a sensor scan circuit 6. The display/sensor region 2a is a region made of, for example, amorphous silicon, polysilicon, CG (continuous grain) silicon, or microcrystalline silicon in the display panel 2. The display / sensor region 2a includes pixels and sensor circuits SC arranged in a matrix. The pixels and the sensor circuits SC are exemplified in Fig. 5 referred to below.

The source driver 4 is, for example, a COG (chip on glass) driver, that is, an LSI chip directly mounted on the display panel 2. The source driver 4 supplies, to data signal lines, data signals for the pixels in the display/sensor region 2a. The source driver 4 further processes outputs from the sensor circuits.

The gate scan circuit 5 supplies, to gate lines (scanning signal lines), scanning signals for use in writing the data signals to the pixels in the display/sensor region 2a. The sensor scan circuit 6 supplies necessary voltages to the sensor circuits in the display/sensor region 2a.

The host controller 3 is a control board provided outside the display panel 2. The host controller 3 supplies, to the source driver 4, (i) display data to be supplied to the source driver 4, (ii) a clock signal, a start pulse and the like to be supplied to the gate scan circuit 5, and (iii) a clock signal, a start pulse, source voltages and the like to be supplied to the sensor scan circuit 6. The host controller 3 supplies the above signals and voltages to the gate scan circuit 5 and the sensor scan circuit 6 via the source driver 4.

Fig. 5 illustrates an example of (i) how the display/sensor region 2a is connected to the source driver 4 and (ii) how the display/sensor region 2a is configured.

In the display/sensor region 2a, an R picture element PIXR, a G picture element PIXG, and a B picture element PIXB constitute a composite pixel. The sensor circuits SC are each inserted at a predetermined location within an array of the composite pixels, that is, at a predetermined location within an array of a plurality of picture elements. (This configuration is described below with reference to Figs. 1 through 3.) The picture elements PIXR, PIXG, and PIXB of each composite pixel are driven, for example, by time division during one horizontal period in accordance with SSD (source share driving).

The picture elements are each provided at an intersection of a gate line GL with a data signal line SL (SLR for R, SLG for G, and SLB for B). The picture element is configured so that a data signal is written to a liquid crystal capacitor CL with use of a TFT M4 serving as a selection element. Further, each picture element electrode forms a storage capacitor C2 between a storage capacitor line CS and itself. The data signal lines SLR, SLG, and SLB are connected to a single terminal P of the source driver 4 via switches SWR, SWG, and SWB, respectively. The colors of the picture elements are not limited to the above three colors R, G, and B. Thus, the picture elements can have any colors.

The sensor circuits SC are each connected to its corresponding picture elements, and are each provided in a region located across the switches SWR, SWG, and SWB from the terminal P. The sensor circuit SC includes an n-channel type amplifier TFT M1, a capacitor C1, and a photosensor D1, each of which is equivalent to its corresponding member illustrated in Fig. 7. The amplifier TFT M 1 has (i) a drain terminal connected to the data signal line SLG and (ii) a source terminal connected to the data signal line SLR. The capacitor C1 and the photosensor D1 are connected to each other in series at a node NetA located on the cathode side of the photosensor D 1. The node NetA is connected to a gate of the amplifier TFT M1. The capacitor C1 has a second end connected to the sensor scan circuit 6 via a corresponding one of read-out lines RW (equivalent to the row select line RS in Fig. 7) provided for respective composite pixel rows. The photosensor D1 has an anode connected to the sensor scan circuit 6 via a corresponding one of reset lines RST (equivalent to the reset line RST in Fig. 7) provided for respective picture element rows. The read-out line RW on each picture element row is connected to the second end of each capacitor C1 on the picture element row. The reset line RST on each picture element row is connected to the anode of each photosensor D1 on the picture element row. The data signal line SLG has an end located across from the terminal P which end is connected to a voltage source V0 via a switch SWS.

The source driver 4 includes a source input/output circuit 47 having outputs each connected to a terminal P. The source output circuit 47 includes stages each constituted by a pair of (i) a buffer 47a including a voltage follower of an operational amplifier and (ii) a switch section 47b. Each of the stages is connected to a terminal P. The buffer 47a has (i) an input terminal connected to an output of a DA converting circuit 46, and (ii) an output connected to the terminal P. The switch section 47b is a circuit for switching between connection and disconnection between an input terminal of an AD converting circuit 45 and the terminal P. The DA converting circuit 46 uses its dedicated voltage source and GND, whereas the AD converting circuit 45 uses its dedicated voltage source and GND.

During a display period for carrying out display in the display / sensor region 2a with use of the picture elements, the buffer 47a is electrically activated, while the switch section 47b disconnects the input terminal of the AD converting circuit 45 from the terminal P. As such, source outputs (data signals) Vd of respective R, G, and B are sequentially supplied to the display/sensor region 2a. In the display/sensor region 2a, the switches SWR, SWG, and SWB are sequentially turned on in a time-sharing manner. As such, the source outputs Vd are sequentially supplied to the data signal lines SLR, SLG, and SLB, respectively, so that display is carried out with use of the picture elements PIXR, PIXG, and PIXB. During this display period, the switch SWS is off.

During a sensor driving period for detecting in the display/sensor region 2a an intensity of either light emitted by a backlight device or external light, the switches SWR, SWG, and SWB are turned off and the switch SWS is turned on so that the data signal line SLG is connect to the voltage source V0. Further, in a manner as illustrated in Fig. 9, the capacitor C1 is charged in advance to a predetermined voltage in a forward direction of the photosensor D1. As such, the gate of the amplifier TFT M1 has a voltage during this period for light intensity detection which voltage corresponds to the intensity of light emitted to the photosensor D1. With the arrangement, a voltage corresponding to the detected light intensity is supplied to the data signal line SLR. The switch SWR is then turned on so that the data signal line SLR is connected to the terminal P of the source driver 4. Note that the data signal line connected to the voltage source VO during the sensor driving period is not necessarily the data signal line SLG. Instead, the data signal line B can be connected to the voltage source VO so as to serve as a voltage source line for the amplifier TFT M1. Alternatively, either of the data signal lines G and B can serve as a voltage source line for the amplifier TFT M1, and be connected simultaneously to the voltage source V0.

During the sensor driving period, (i) the buffer 47a of the source driver 4 is disconnected from its voltage source so that the buffer 47a has an output in a high impedance state, and (ii) the switch section 47b connects the input terminal of the AD converting circuit 45 to the terminal P. As such, a sensor voltage Vs, that is, an analogue output of the sensor circuit SC, is supplied to the AD converting circuit 45. The AD converting circuit 45 then converts the supplied sensor voltage Vs into digital data. The digital data is used by a subsequent processing circuit as a result of the light intensity detection.

As described above, the source driver 4 functions as light intensity detecting means for detect the intensity of light emitted to the photosensor D1.

Fig. 1 illustrates an example layout of the composite pixels PIX and the above-described sensor circuits SC in the display/ sensor region 2a.

Fig. 1 is a plan view, as seen in a direction perpendicular to a display surface, which illustrates respective configurations of composite pixels. PIX(1) and PIX(2) aligned in a column direction on an m-th column. The composite pixel PIX(1) includes an R picture element PIXR(1), a G picture element PIXG(1), and a B picture element PIXB(1) aligned in a row direction. The composite pixel PIX(2) includes an R picture element PIXR(2), a G picture element PIXG (2), and a B picture element PIXB(2) aligned in the row direction. The composite pixels PIX(1) and PIX(2) are separated from each other by a region in which a sensor circuit SC is provided.

As described above, the display/sensor region 2a of the present embodiment includes a picture element row pair 20 made up of two picture element rows R1 and R2 that are adjacent to each other and that are separated from each other by a region in which a sensor circuit SC is provided, as represented by the composite pixels PIX(1) and PIX (2). The description below uses the phrase "first picture element row" to refer to a picture element row R1 of the picture element row pair 20 which picture element row R1 includes the composite pixel PIX(1). The description below uses the phrase "second picture element row" to refer to a picture element row R2 of the picture element row pair 20 which picture element row R2 includes the composite pixel PIX(2). With the display panel 2, the display device can be driven by AC driving so that the composite pixels PIX(1) and PIX(2) receive their respective data signals having their respective polarities which are opposite to each other.

Picture element row pairs 20 illustrated in Fig. 1 can be provided uninterrupted in the column direction, or can be provided in the column direction as individually separated from one another by a space equivalent to a predetermined number of picture element rows. This arrangement is described below in detail.

On the picture element row R1, the R picture element PIXR(1) includes a picture element electrode ER(1), a TFT M4, and a storage capacitor C2; the G picture element PIXG(1) includes a picture element electrode EG(1), a TFT M4, and a storage capacitor C2; and the B picture element PIXB(1) includes a picture element electrode EB(1), a TFT M4, and a storage capacitor C2. On the picture element row R2, the R picture element PIXR(2) includes a picture element electrode ER(2), a TFT M4, and a storage capacitor C2; the G picture element PIXG(2) includes a picture element electrode EG(2), a TFT M4, and a storage capacitor C2; and the B picture element PIXB(2) includes A picture element electrode EB(2), a TFT M4, and a storage capacitor C2.

In the plan view, the storage capacitor line (first row line) CS(1) on the picture element row R1 has a footprint that covers at least a portion of an outside area being outwardly adjacent to an edge of a footprint of the picture element electrodes ER(1), EG(1), and EB(1) in the column direction. Further, in the plan view, the storage capacitor line (first row line) CS(2) on the picture element row R2 has a footprint that covers at least a portion of an outside area being outwardly adjacent to an edge of a footprint of the picture element electrodes ER(2), EG(2), and EB(2) in the column direction. Fig. 2 illustrates a practical example of the patterns in the plan view. As illustrated in Fig. 2, the whole footprint of the storage capacitor line CS(1) in this example extends though the outside area being outwardly adjacent to the footprint of the picture element electrodes ER(1), EG(1), and EB(1) in the column direction. Further, the whole footprint of the storage capacitor line CS(2) in this example extends though the outside area being outwardly adjacent to the footprint of the picture element electrodes ER(2), EG(2), and EB(2) in the column direction. Note that for simplification, Fig. 2 omits configurations of respective picture elements other than the B picture element.

The storage capacitor lines CS(1) and CS(2) can alternatively be arranged as follows: The storage capacitor line CS(1) is, as illustrated in Fig. 13, has a footprint in which (i) a part csx of the storage capacitor line CS(1) extends through the outside area being outwardly adjacent to a footprint of the picture element electrodes ER(1), EG(1), and EB(1) in the column direction, and (ii) a remaining part csy of the storage capacitor line CS(1) extends in a layer under the picture element electrodes ER(1), EG(1), and EB(1), that is, through the footprint of the picture element electrodes ER(1), EG(1), and EB(1); and the storage capacitor line CS(2) is, as illustrated in Fig. 13, has a footprint in which (i) a part csx of the storage capacitor line CS(2) extends through the outside area being outwardly adjacent to a footprint of the picture element electrodes ER(2), EG(2), and EB(2) in the column direction, and (ii) a remaining part csy of the storage capacitor line CS(2) extends in a layer under the picture element electrodes ER(2), EG(2), and EB(2), that is, through the footprint of the picture element electrodes ER(2), EG(2), and EB(2).

The storage capacitor line CS(1) in each picture element row pair 20 has a footprint that covers at least a portion of the outside area being outwardly adjacent to the footprint of the picture element electrodes ER(1), EG(1), and EB(1) in the column direction so as to be farther from a sensor circuit SC sandwiched between the picture element row pair 20. The storage capacitor line CS(2) in each picture element row pair 20 has a footprint that covers at least a portion of the outside area being outwardly adjacent to the footprint of the picture element electrodes ER(2), EG(2), and EB(2) in the column direction so as to be farther from a sensor circuit SC sandwiched between the picture element row pair 20. Alternatively, the storage capacitor lines CS(1) and CS(2) in each picture element row pair 20 can be arranged such that (i) the storage capacitor line CS(1) has a footprint that covers at least a portion of the outside area being outwardly adjacent to the footprint of the picture element electrodes ER(1), EG(1), and EB(1) in the column direction so as to be closer to the photosensor circuit SC sandwiched between the picture element row pair 20, and that (ii) the storage capacitor line CS(2) has a footprint that covers at least a portion of the outside area being outwardly adjacent to the footprint of the picture element electrodes ER(2), EG(2), and EB(2) in the column direction so as to be closer to the photosensor circuit SC sandwiched between the picture element row pair 20.

As described above, the storage capacitor lines CS of the picture element rows R1 and R2 of each picture element row pair 20 each have a footprint that has an outside area which is, as seen in the direction perpendicular to the display surface, outwardly adjacent to either closer edges of the opposite edges to a sensor circuit SC provided in a region between the picture element rows R1 and R2 or farther edges of the opposite edges from the sensor circuit SC provided in the region between the picture element rows R1 and R2.

The display device can be driven by AC driving so that the composite pixels PIX(1) and PIX(2) receive their respective data signals which are opposite in polarity to each other. As such, the picture element electrodes ER(1), EG(1), and EB(1) of the composite pixel PIX(1) each retain a data potential of either a positive polarity or a negative polarity, whereas the picture element electrodes ER(2), EG(2), and EB(2) of the composite pixel PIX(2) each retain a data potential of a polarity opposite to the above polarity (see Fig. 1). The sensor circuit SC is thus subjected to potential fluctuations caused by (i) the composite pixel PIX(1) via parasitic capacitances Cr1, Cg1, and Cb1 of the respective picture element electrodes ER(1), EG(1), and EB(1) and (ii) the composite pixel PIX(2) via parasitic capacitances Cr2, Cg2, and Cb2 of the respective picture element electrodes ER(2), EG(2), and EB(2). In this case, however, the picture element electrodes ER(1), EG(1), and EB(1) are positioned with respect to the picture element electrodes ER(2), EG(2), and EB(2) so that a state close to a balanced state is achieved for the sensor circuit SC. The above potential fluctuations are consequently small because an effect of the picture element electrodes ER(1), EG(1), and EB(1) cancels out that of the picture element electrodes ER(2), EG(2), and EB(2).

As such, it is possible to provide a display device including a photosensor circuit which is not easily subjected to potential fluctuations caused by positioning of picture element electrodes near the photosensor circuit. In particular, the example of Fig. 1 includes the composite pixels PIX(1) and PIX(2) on the respective picture element rows R1 and R2, which composite pixels PIX(1) and PIX(2) have their respective patterns that achieves symmetry in the plan view, with the sensor circuit SC as a center, with respect to the column direction. The sensor circuit SC is thus only extremely slightly subjected to potential fluctuations.

Further, as illustrated in Fig. 2, the gate line GL(1) is provided so as to extend in a layer under the picture element electrodes ER(1), EG(1), and EB(1), whereas the gate line GL(2) is provided so as to extend in a layer under the picture element electrodes ER(2), EG(2), and EB(2). Specifically, in the plan view, the gate line (second row line) GL(1) on the picture element row R1 has a footprint covers any portion of an inside area rather than that of the outside area being outwardly adjacent to the footprint of the picture element electrodes ER(1), EG(1), and EB(1) in the column direction. Further, in the plan view, the gate line (second row line) GL(2) on the picture element row R2 has a footprint covers any portion of an inside area rather than that of the outside area being outwardly adjacent to the footprint of the picture element electrodes ER(2), EG(2), and EB(2) in the column direction.

The above inside region for the gate line GL(1) can be located within a region having a span SP1 in the column direction which span SP1 is defined by two picture element electrode edges Ea1 and Eb1. The gate line GL(1) in each picture element row pair 20 has a footprint covering a portion of the inside region with regard to the picture element electrodes ER(1), EG(1), and EB(1) and is closer to the picture element electrode edge Eb1 of the two edges, which is the edge farther from a sensor circuit SC sandwiched between the picture element row pair 20. The above inside region for the gate line GL(2) can be located within a region having a span SP2 in the column direction which span SP2 is defined by two picture element electrode edges Ea2 and Eb2. The gate line GL(2) in each picture element row pair 20 has a footprint covering a portion of the inside region with regard to the picture element electrodes ER(2), EG(2), and EB(2) and is closer to the picture element electrode edge Eb2 of the two edges, which is the edge farther from a sensor circuit SC sandwiched between the picture element row pair 20. Alternatively, the gate lines GL(1) and GL(2) can be arranged such that (i) the gate line GL(1) has a footprint covering a portion of the inside region with regard to the picture element electrodes ER(1), EG(1), and EB(1) and is closer to the picture element electrode edge Ea1, which is the edge closer to the sensor circuit SC sandwiched between the picture element row pair 20, and that (ii) the gate line GL(2) has a footprint covering a portion of the inside region with regard to the picture element electrodes ER(2), EG(2), and EB(2) and is closer to the picture element electrode edge Ea2, which is the edge closer to the sensor circuit SC sandwiched between the picture element row pair 20.

As described above; the respective gate lines GL on the picture element rows R1 and R2 in each picture element row pair 20 each have a footprint that has an inside region which is present within a span in the column direction which span is defined by two picture element electrode edges, the inside regions being provided such that each of the gate lines GL is, as seen in the direction perpendicular to the display surface, closer either (i) to a first one of the two picture element electrode edges, the first one being closer to a sensor circuit SC provided in a region between the picture element rows R1 and R2, or (ii) to a second one of the two picture element electrode edges, the second one being farther from the sensor circuit SC.

With the arrangement, the picture element electrodes ER(1), EG(1), and EB(1) are positioned with respect to the picture element electrodes ER(2), EG(2), and EB(2) so that a state close to a balanced state is achieved for the sensor circuit SC. In addition, the picture element electrodes ER, EG, and EB are positioned with respect to the gate line GL, provided close to the picture element electrodes ER, EG, and EB in the panel thickness direction, so that a state close to a balanced state is achieved for the sensor circuit SC. As a result, the sensor circuit SC is further less likely to be subjected to potential fluctuations caused by neighboring patterns.

The gate lines GL(1) and GL(2) and the storage capacitor lines CS(1) and CS(2) are each made of a gate metal. The picture element electrodes ER(1), EG(1), EB(1), ER(2), EG(2), and EB(2) are each, for example, a transparent electrode made of ITO or the like, and are provided in a layer above the gate metal.

The storage capacitor lines CS(1) and CS(2) each form a storage capacitor C2 between each corresponding electrode 101 and itself. The electrode 101 is made of a Si material layer, and is provided in a layer below the gate metal. In the examples of Figs. 2 and 13, the electrode 101 is routed through a path which is bent at a drain of the TFT M4 and which is bent back at a portion that overlaps a corresponding one of the storage capacitor lines CS(1) and CS(2). The electrode 101 can, however, be extended in any manner. The electrode 101 can, for example, be bent so as to linearly connect the TFT M4 to a position at which the electrode 101 overlaps a corresponding one of the storage capacitor lines CS(1) and CS(2). An overlapped region between the electrode 101 and a corresponding one of the storage capacitor lines CS(1) and CS(2), in which region a storage capacitor C2 is formed, is adjusted to a desired size.

The display device further includes source lines SLR(m), SLG(m), and SLB(m) for R, G, and B, respectively. The source lines SLR(m), SLG(m), and SLB(m) each correspond to the data line 6' illustrated in Fig. 7. As illustrated in Fig. 11, the source lines SLR(m), SLG(m), and SLB(m) are provided in a layer above the gate lines GL(1) and GL(2) and the storage capacitor lines CS(1) and CS(2).

As illustrated in Fig. 2, the sensor circuit SC includes an amplifier TFT M1, a photosensor D1, and a capacitor C1. The amplifier TFT M1, the photosensor D1, and the capacitor C1 are all provided in a region located, in the plan view, between a reset line RST and a read-out line RW, both of which extend in the row direction. The reset line RST and the read-out line RW serve as opposite sides of a region of the sensor circuit SC which sides align in the column direction. The reset line RST and the read-out line RW are each made of the gate metal.

The amplifier TFT M1, the photosensor D1, and the capacitor C1 of each sensor circuit are connected to one another at a node NetA via an interconnect conductor 102. The interconnect conductor 102 is made of the Si material layer, and is provided in a layer below the gate metal. The sensor circuits can each further include a light shield in a layer under the photosensor D 1.

Fig. 3 is a cross-sectional view taken along line B-B' of Fig. 2.

The interconnect conductor 102 of the sensor circuit SC forms (i) the parasitic capacitance Cb1 between the picture element electrode EB(1) and itself and (ii) the parasitic capacitance Cb2 between the picture element electrode EB(2) and itself. The picture element electrode EB(1) has a data potential which is opposite in polarity to a data potential of the picture element electrode EB(2). An effect of the picture element electrode EB(1) on a potential of the interconnect conductor 102 cancels out an effect of the picture element electrode EB(2) on the potential of the interconnect conductor 102. Further, positioning of the gate lines GL(1) and GL(2) relative to the interconnect conductor 102 achieves a state close to a balanced state. Thus, the effect of the picture element electrode EB(1) on the potential of the interconnect conductor 102 more likely cancels out the effect of the picture element electrode EB(2) on the potential of the interconnect conductor 102.

As such, according to the present embodiment, the potential at the node NetA is less likely affected defectively by the potentials of its neighboring patterns so as to fall outside a range of designed values.

The examples of Figs. 1 through 3 each illustrate a configuration including (i) a storage capacitor line CS as the first row line and (ii) a gate line GL as the second row line. The present invention is, however, not limited to this. The present invention can thus include (i) a gate line GL as the first row line and (ii) a storage capacitor line as the second row line. Further, the first and second row lines can each be a row line other than the storage capacitor line CS and the gate line GL.

The present invention encompasses a configuration which includes the first row line but does not include the second row line. In this case, the first row line is, for example, a gate line GL.

The display device can be arranged such that the first row line is a storage capacitor line CS, and that both (i) the first row line of the picture element row R1 of each picture element row pair 20 and (ii) the first row line of the picture element row R2 of each picture element row pair 20 each have a footprint that has an outside areas which is, as seen in the first direction, outwardly adjacent to farther edges of the opposite edges from the sensor circuit SC. In this case, the storage capacitor lines CS on the respective picture element rows R1 and R2 can be driven so as not to be opposite to each other in phase. With the arrangement, it is possible, by separating the storage capacitor lines CS far from the sensor circuit SC, to solve the problem that it is difficult to cause effects of the respective storage capacitor lines CS on the potential of the sensor circuit SC to cancel out each other.

The display device can be arranged such that the first row line is a storage capacitor line CS, and that both (i) the first row line of the picture element row R1 of each picture element row pair 20 and (ii) the first row line of the picture element row R2 of each picture element row pair 20 each have a footprint that has an outside areas which is, as seen in the first direction, outwardly adjacent to closer edges of the opposite edges to the sensor circuit SC. In this case, the storage capacitor lines cause no effect on the potential of the sensor circuit SC in a case where the storage capacitor lines are not driven so as to be each constantly set at a fixed potential. As such, in the case where the storage capacitor lines of the display device are not driven, it is possible to prevent a change in the potential of the sensor circuit SC.

The display device can be arranged such that the first row line is a gate line GL, and that both (i) the first row line of the picture element row R1 of each picture element row pair 20 and (ii) the first row line of the picture element row R2 of each picture element row pair 20 are provided each have a footprint that has an outside areas which is, as seen in the first direction, outwardly adjacent to farther edges of the opposite edges from the sensor circuit SC. In this case, the gate lines GL each include both a portion connected to the selection element of a picture element and the other portion. A picture element electrode is thus unlikely to cause a uniform effect on the potential of the sensor circuit SC via a single gate line GL. As such, it is possible, by separating the gate lines GL far from the sensor circuit SC, to easily solve the problem that it is necessary to cause effects of the respective first and second picture element rows to cancel out each other more accurately.

The display device can be arranged such that the first row line is a gate line GL, and that both (i) the first row line of the picture element row R1 of each picture element row pair 20 and (ii) the first row line of the picture element row R2 of each picture element row pair 20 each have a footprint that has an outside areas which is, as seen in the first direction, outwardly adjacent to closer edges of the opposite edges to the sensor circuit SC. In this case also, the gate lines GL are normally not driven when the sensor circuit SC is driven, and thus each normally have only a small effect on the potential of the sensor circuit SC. As such, it is possible to easily prevent a change in the potential of the sensor circuit SC.

The first row line can alternatively include a plurality of lines for signals different from one another. Further, the second row line can alternatively include a plurality of lines for signals different from one another. The first row line can, for example, include a storage capacitor line CS and a gate line GL. The second row line can, for example, include a storage capacitor line CS and a gate line GL. In a case where the first and second row lines are both provided, it is possible that at least one of the first and second row lines includes such a plurality of lines.

In each picture element row pair 20, the picture element rows R1 and R2 have their respective numbers of the first row line which numbers can be different from each other. This arrangement can be applied to the second row line.

In a case where (i) the first row line on the picture element row R1 in each picture element row pair 20 includes a first plurality of conductors for signals different from one another, (ii) the first row line on the picture element row R2 in the picture element row pair 20 includes a second plurality of conductors for signals different from one another, and (iii) the first plurality is equal in number to the second plurality, the first plurality of lines included in the first row line on the first picture element row can be, as seen in the direction perpendicular to the display surface, aligned in the column direction in an order different from an order in which the second plurality of lines included in the first row line on the second picture element row are aligned in the column direction. This arrangement can be applied to the second row line as well. With the arrangement, it is possible to cause effects of the respective first row lines or the second row lines on the potential of the sensor circuit SC to highly accurately cancel out each other.

Between any picture element row pairs 20, the respective first row lines or the respective second row lines can be positioned differently from each other with respect to the picture elements. As such, whether a line is provided outside or inside can be determined differently for each picture element row pair 20.

As described above, all picture element rows in the array can be divided into picture element row pairs 20. In this case, one row of sensor circuits SC is provided for each two picture element rows. As a result, it is possible to provide a display device suitably arranged for AC driving in which the polarities of data signals are reversed every picture element row.

As described above, the picture element row pairs 20 can be provided so as to be separated from one another by a space equivalent to a predetermined number of picture element rows. Picture elements not constituting the picture element row pairs 20 can be provided in a pattern which is not particularly limited in sense. In this case, in particular, the picture element row pairs 20 can be provided so as to be separated from one another by a space equivalent to k-2 picture element rows, in a case where an uppermost picture element row pair 20 among the picture element row pairs 20 includes two picture element rows of which an upper picture element row is a k-th picture element row (where k is a natural number not smaller than 2).

With the arrangement, the two picture element rows of the picture element row pair on the k-th row are separated from each other by a space equivalent to k-2 picture element rows. As such, in a case where display modes are converted to each other for display which display modes have respective vertical resolutions whose respective multiplying factors are different from each other at a ratio of factors of k, it is possible to cause the polarities of respective data signals for the first and second picture element rows in each picture element row pair to be different from each other for any vertical resolution. This is further described below with reference to a specific example illustrated in Fig. 6.

Fig. 6 illustrates an arrangement of a display panel 2 which can carry out display with two resolution modes, that is, a VGA mode and a QVGA mode. Fig. 6 shows (i) with dashed lines, regions in each of which sensor circuits SC are inserted, and (ii) picture element row pairs 20 each including two picture element rows separated by sensor circuits SC. An uppermost picture element row pair 20 is made up of a picture element row on the second row and a picture element row on the third row. The uppermost picture element row pair 20 is followed by another picture element row pair 20 with no picture element row in-between. This is a case of k=2. With the arrangement, since the factors of the number 2 are 1 and 2, polarity reversal display is compatible between QVGA and VGA modes having respective vertical resolutions which are different from each other at a ratio of 1:2. In other words, either in the VGA mode or in the QVGA mode having a vertical resolution half that of the VGA mode, any two picture element rows separated by a row of sensor circuits SC can have respective polarities of data signals which polarities are opposite to each other.

In a case of k=3, polarity reversal display is compatible between two modes having respective vertical resolutions which are different from each other at a ratio of 1:3. In a case of k=4, since the factors of the number 4 are 1, 2, and 4, polarity reversal display is compatible among vertical resolutions having a ratio of 1:2:4. As such, it is possible to achieve compatibility between any vertical resolutions.

The present embodiment is an example which includes a single sensor circuit SC for each composite pixel including three picture elements of R, G, and B. The present invention is, however, not limited to this. The sensor circuits SC can thus be provided at any ratio. For example, a single sensor circuit can be provided for each plurality of composite pixels. Further, the sensor circuits SC are not necessarily configured as described in the above example, and can thus be configured in any manner. As such, the sensor circuits SC can each be (i) a photosensor D1 including a diode-connected transistor, (ii) a plurality of photosensors D1 connected in parallel or in series, or (iii) a plurality of capacitors C1 arranged in a dispersed manner in a sensor circuit region. The sensor output can be supplied to one of data signal lines of R, G, and B, or supplied to a line provided, separately from the data signal lines, especially for the sensor output. The voltage source line for each sensor circuit SC can be one of the data signal lines for R, G, and B which is not a data signal line to which the sensor output is supplied, or can be its dedicated voltage source line provided so as to especially serve as such.

The source driver 4 in the above example is a COG driver. The source driver 4 of the present invention is, however, not limited to such a COG liquid crystal driver mounted on glass. As such, the source driver 4 can, for example, be (i) a TCP driver not mounted on a panel, or (ii) a driver, mounted on an external board, which supplies analogue outputs directly to a panel.

Since a COG driver has a limited number of outputs, the SSD method in the above example is advantageous in that it is unnecessary to increase the number of outputs. The present invention can employ, other than the SSD method, normal line-sequential driving or dot-sequential driving.

According to the above example, an AD converting block for converting sensor data into digital data is included in a COG driver. The present invention is, however, not limited to this. As such, the AD converting block can, for example, be mounted on an external board, or included in a panel as an SSD block.

The present invention is not limited to the description of the embodiments above, but may be altered in various ways by a skilled person within the scope of the claims. Any embodiment based on a combination of technical means appropriately altered within the scope of the claims is also encompassed in the technical scope of the present invention.

Industrial Applicability

The present invention is suitably applicable, for example, for fingerprint authentication involving use of a photosensor or in a display device including a touch panel.

Reference Signs List

1 liquid crystal display device (display device)
4 source driver (light intensity detecting means)
20 picture element row pair
M1 amplifier TFT
C1 capacitor
D1 photosensor
SC sensor circuit (photosensor circuit)
CS(1), CS(2) storage capacitor line (first row line)
GL(1), GL(2) gate line (scanning signal line; second row line)
R1 picture element row (first picture element row)
R2 picture element row (second picture element row)
PIXR(1), PIXG(1), PIXB(1), PIXR(2), PIXG(2), PIXB(2) picture element
ER(1), EG(1), EB(1), ER(2), EG(2), EB(2) picture element electrode

**Claims**

1. A display device which is an active matrix display device, comprising:

an array of a plurality of picture elements each including a picture element electrode to which a data signal is written;
at least one photosensor circuit which is provided in such a manner as to be inserted in the array and which outputs a signal in accordance with an intensity of irradiation light; and
light intensity detecting means for detecting the signal of the at least one photosensor circuit so as to detect the intensity of the irradiation light,
the at least one photosensor circuit being respectively provided in a region between a first picture element row and a second picture element row adjacent to each other composing a picture element pair,
the first picture element row and the second picture element row each including at least one first row line, separate from a line for the at least one photosensor circuit, of which a footprint covers, as seen in a first direction perpendicular to a display surface, at least a portion of an outside area being outwardly adjacent to either one of edges, opposite in a column direction, of a footprint of the picture element electrode,

the outside areas with regard to the first picture element row and the second picture element row of the respective picture element row pair both being outwardly adjacent to either closer edges of the opposite edges to the at least one photosensor circuit or farther edges of the opposite edges from the at least one photosensor circuit.

2. The display device according to claim 1, wherein:

the first picture element row and the second picture element row each further include at least one second row line, separate from the line for the at least one photosensor circuit, of which a footprint covers any portion of an inside area rather than that of the outside area as seen in the first direction;

the inside area is present within a span in the column direction, the span being defined by two picture element electrode edges including a first picture element electrode edge and a second picture element electrode edge, the first picture element electrode edge being closer to the at least one photosensor circuit than the second picture element electrode edge is; and

the inside areas with regard to the first picture element row and the second picture element row of the respective picture element row pair are, as seen in the first direction, both inwardly adjacent either more closely to the first picture element electrode edge than to the second picture element electrode edge or more closely to the second picture element electrode edge than to the first picture element electrode edge.

3. The display device according to claim 1 or 2, wherein:

the at least one first row line is a storage capacitor line; and

both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to farther edges of the opposite edges from the at least one photosensor circuit.

4. The display device according to claim 2, wherein:

the at least one first row line is a storage capacitor line;

the at least one second row line is a scanning signal line; and

both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to farther edges of the opposite edges from the at least one photosensor circuit.

5. The display device according to claim 3 or 4, wherein:

a signal for driving the at least one first row line of the first picture element row is not in anti-phase with a signal for driving the at least one first row line of the second picture element row.

6. The display device according to claim 1 or 2, wherein:

the at least one first row line is a storage capacitor line; and

both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to closer edges of the opposite edges to the at least one photosensor circuit.

7. The display device according to claim 2, wherein:

the at least one first row line is a storage capacitor line;
the at least one second row line is a scanning signal line; and
both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to closer edges of the opposite edges to the at least one photosensor circuit.

8. The display device according to claim 6 or 7, wherein:

the at least one first row line is not dynamically driven.

9. The display device according to claim 1 or 2, wherein:

the at least one first row line is a scanning signal line; and
both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to farther edges of the opposite edges from the at least one photosensor circuit.

10. The display device according to claim 2, wherein:

the at least one first row line is a scanning signal line;
the at least one second row line is a storage capacitor line; and
both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to farther edges of the opposite edges from the at least one photosensor circuit.

11. The display device according to claim 1 or 2, wherein:

the at least one first row line is a scanning signal line; and
both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to closer edges of the opposite edges to the at least one photosensor circuit.

12. The display device according to claim 2, wherein:

the at least one first row line is a scanning signal line;
the at least one second row line is a storage capacitor line; and
both (i) the at least one first row line of the first picture element row of the respective picture element row pair and (ii) the at least one first row line of the second picture element row of the respective picture element row pair are provided such that the outside areas with regard to the first picture element row and the second picture element row of the respective picture element row pair are, as seen in the first direction, both outwardly adjacent to closer edges of the opposite edges to the at least one photosensor circuit.

13. The display device according to claim 1 or 2, wherein:

the at least one first row line of each of the first picture element row and the second picture element row includes a plurality of lines for respective signals; and

the plurality of lines included in the at least one first row line are arranged in the column direction in an order which is, as seen in the first direction, reversed between the first picture element row and the second picture element row of the respective picture element row pair.

14. The display device according to claim 2, wherein:

the at least one second row line of each of the first picture element row and the second picture element row includes a plurality of lines for respective signals; and

the plurality of lines included in the at least one second row line are arranged in the column direction in an order which is, as seen in the first direction, reversed between the first picture element row and the second picture element row of the respective picture element row pair.

15. The display device according to any one of claims 1 to 14, wherein:

the display device is capable of being driven so that the data signal has a polarity which is opposite between the first picture element row and the second picture element row of the respective picture element row pair.

16. The display device according to any one of claims 1 to 15, wherein:

each picture element row in the array corresponds to the respective picture element row pair.

17. The display device according to any one of claims 1 to 16, wherein:

a plurality of the respective picture element row pair are formed so as to be individually separated by a space equivalent to k-2 picture element rows in a case where an upper picture element row of two picture element rows of an uppermost one of the plurality of the respective picture element row pair corresponds to a k-th row, where k is a natural number not smaller than 2.

FIG. 1

FIG. 2

FIG. 3

FIG. 4

FIG. 5

EP 2 333 604 A1

FIG. 6

FIG. 7

FIG. 8

Vrst          Vrw          Vdd

A
C1

Cst          Cagd          M1

K
NetA          Cags          Vout

D1

FIG. 9

Vrst    0
        -10

Vdd    15

        20

Vrw    0

                DARK
VnetA    0
                BRIGHT    DARK
        DARK
                BRIGHT
        BRIGHT

Vout                    BRIGHT

        T1        T2

t1    t2        t3    t4

FIG. 10

FIG. 11

FIG. 12

A
A'

POSITIVE
POLARITY PIXEL

SENSOR CIRCUIT
REGION

NEGATIVE
POLARITY PIXEL

EB(1)

Cb2

EB(2)

CS(1)

| PIXEL ITO |

| PIXEL ITO |

| GE |    | GE |~GL(1)    Cb1

netA

~CS(2)    ~GL(2)

102

| GE |    | GE | (M4)

C2(M4)

| Si |

~C2

| Si |

101

Cx

| Si |

101

| LIGHT SHIELD |

LS

FIG. 13

**INTERNATIONAL SEARCH REPORT**

| International application No. |
| --- |
| PCT/JP2009/060542 |

A. CLASSIFICATION OF SUBJECT MATTER
G02F1/133(2006.01)i, G02F1/1368(2006.01)i, G06T1/00(2006.01)i, G09G3/20 (2006.01)i, G09G3/36(2006.01)i

According to International Patent Classification (IPC) or to both national classification and IPC

B. FIELDS SEARCHED

Minimum documentation searched (classification system followed by classification symbols)
G02F1/133, G02F1/1368, G06T1/00, G09G3/20, G09G3/36

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2007-271781 A  (Toshiba Matsushita Display Technology Co., Ltd.), 18 October, 2007 (18.10.07), Full text; all drawings (Family: none) | 1-17 |
| A | JP 2007-65239 A  (Mitsubishi Electric Corp.), 15 March, 2007 (15.03.07), Full text; all drawings (Family: none) | 1-17 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 September, 2009 (01.09.09) | 08 September, 2009 (08.09.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/060542

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2003-131798 A (Sharp Corp.),<br>09 May, 2003 (09.05.03),<br>Full text; all drawings<br>& JP 3959454 B2          & US 2003/0076295 A1<br>& US 7158129 B2          & KR 2003/0033975 A<br>& KR 437739 B            & CN 1424639 A<br>& CN 1242312 C           & TW 584810 A | 1-17 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007145347 A
- JP 2007047991 A